# EUROPEAN PATENT APPLICATION

(11) **EP 1 700 653 A1**
(43) Date of publication of application: **13.09.2006**
(21) Application number: 05005416.2
(22) Date of filing: 11.03.2005
(51) Int. Cl.: B23B 3/10, B23Q 1/01

(54) **Vertical compound lathe and milling machine**

(71) Applicant: ANNN Yang Machinery Co., Ltd., Taiping City Taichung Taiwan (TW)
(72) Inventor: Huang, Shui-An, Taichung Taiwan (TW)
(74) Representative: Viering, Jentschura & Partner

(57) **Abstract**

A vertical compound lathe and milling machine aims to hold a working piece on a machining equipment and perform all machining operations such as cutting, milling, engraving, drilling, tapping, boring, grinding and the like. It provides improvements over the conventional machining equipment that have to do machining operations on individual machines and result in repetitive removing and mounting of the work piece, and undesirable precision. It mainly includes a chassis with a holding space and a base on one side, a first shaft on the base movable forwards and backwards, a second shaft on the first shaft movable leftwards and rightwards, a third shaft on the second shaft movable up and down, and a first driving spindle on the third shaft to hold a machining cutter. The first driving spindle may be turned to a selected angle. There is a cutter magazine on one side of the first shaft and a cutter switching mechanism adjacent to the cutter magazine. The holding space of the chassis further has a second driving spindle on which there is a detachable working table. The second driving spindle can hold a round or smaller working piece. The working table can hold a larger working piece. The first driving spindle can be moved forwards and backwards, leftwards and rightwards, and up and down to perform machining operations such as cutting, milling, engraving, drilling, tapping, boring, grinding and the like on the working piece held by the second driving spindle. Thus repetitive removing and mounting of the working piece is eliminated, and machining efficiency and precision are enhanced.

## Description

### BACKGROUND OF THE INVENTION

### 1. Field of the Invention

The present invention relates to a vertical compound lathe and milling machine for holding a working piece on a machining equipment and performing all machining operations such as cutting, milling, engraving, drilling, tapping, boring, grinding and the like that has a first driving spindle to hold cutters such as lathe cutters, milling cutters, engraving cutters, tapping cutters, boring cutters, drill gimlets, grinding cutters and is movable forward and backward, left and right, and up and down, and a second driving spindle and a working table located beneath the first driving spindle to hold the working piece such that all machining operations on the working piece can be finished through a single machining equipment to enhance fabrication efficiency and precision.

### 2. Description of the Prior Art

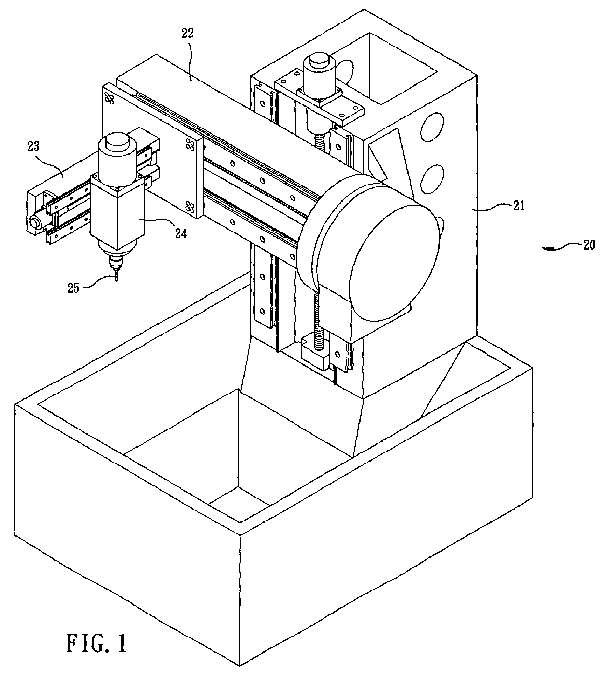

The conventional metal fabrication machinery can be classified in single machines such as lathes, boring machines and the like, and compound machines such as milling machines, drilling machines and the like. The lathes and boring machines perform fabrication by rotating the working piece with the lathe cutter and boring cutter moving forwards linearly, The milling machines and drilling machines perform fabrication by holding the working piece still with the milling cutter and drill gimlet held by the driving spindle to be rotated at a high speed and moved on the working piece. In order to increase fabrication types, most present metal machinery are equipped with a cutter magazine and a cutter switching mechanism. The cutter held by the driving spindle may be switched with different types or dimensions of cutters in the cutter magazine through the switching mechanism and a preset control process. On the milling machine, the milling cutters may be changed automatically to do machining operations such as milling, drilling, engraving, tapping, and grinding on the working piece. The lathe also can perform cutting and boring operations on the working piece by automatically switching the cutters. However, the conventional techniques available in industry heretofore still cannot provide compound functions of the lathe and the milling machine on an integrated machinery. Hence a working piece often has to be moved to the lathe and milling machine to finish the compound machining operations they provide individually. As a result, the general practice in the industry is to procure one set of lathe and one set of milling machine in the plant. The working piece has to go through machining operation first on the lathe or milling machine, then is removed and mounted onto the milling machine or lathe to do other machining operations. Such an approach results in a lower machining efficiency and undesirable precision. Moreover, referring to FIG. 1, a conventional fabrication machine 20 has a first driving spindle 24 for holding a cutter, and a first shaft 21 to move a second shaft 22 and a third shaft 23 up and down, the second shaft 22 to move the third shaft 23 left and right, and the third shaft 23 to move the driving spindle 24 forward and backward. The weight of the second shaft 22, third shaft 23 and driving spindle 24, and the driving force of the first driving spindle 24 applying on the working piece during machining operation are on the same side of the first shaft 21. The gravity center of the fabrication machine 20 tilts to one side during machining operation, and is not stable. Vibration and noise occur. The precision of the finished products often is not desirable. There is still room for improvement.

### SUMMARY OF THE INVENTION

In view of the aforesaid disadvantages, the primary object of the present invention is to hold a working piece on a machine and finish machining operations such as cutting, milling, engraving, drilling, tapping, boring, grinding and the like without removing the working piece thereby to enhance machining efficiency and precision.

Another object of the invention is to provide a sloped surface contact between a first shaft and a second shaft, and to provide a third shaft on the second shaft, a first driving spindle on the third shaft, and to divide the weight and driving force of the first driving spindle during machining operations to components of force in the vertical direction and horizontal direction so that the component of force in the horizontal direction on the first shaft is reduced to prevent tilting of the gravity center.

In order to achieve the foregoing objects, the invention provides a number of features that include: a chassis is provided that has an indented holding space with a base on one side, the base holds a first shaft which is movable forwards and backwards, a second shaft mounted onto the first shaft that is movable left and right, a third shaft mounted onto the second shaft that is movable up and down, a first driving spindle mounted onto the third shaft that is turnable for a selected angle, the first driving spindle holds a machining cutter; the indented holding space holds a second driving spindle, a movable working table is provided between the second driving spindle and the first driving spindle, and the second driving spindle and the working table hold a working piece.

The foregoing, as well as additional objects, features and advantages of the invention will be more readily apparent from the following detailed description of an embodiment, which proceeds with reference to the accompanying drawings. The embodiment serves only for illustrative purpose, and is not the limitation of the invention.

### BRIEF DESCRIPTION OF THE DRAWINGS

FIG. 1 is a perspective view of a conventional machining equipment.
FIG. 2 is a perspective view of the invention.
FIGS. 3A and 3B are schematic views of the first shaft of the invention in operating conditions of moving forwards and backwards.
FIGS. 4A and 4B are schematic views of the third shaft of the invention in operating conditions of moving up and down.
FIGS. 5A and 5B are schematic views of the second shaft of the invention in operating conditions of moving leftwards and rightwards.
FIGS. 6A and 6B are fragmentary sectional views of the working table of the invention in conditions of moving forwards and backwards.
FIG. 7 is a schematic view of the invention showing the first driving spindle coupled with the second driving spindle in a use condition.
FIG. 8 is a schematic view of the invention showing the first driving spindle coupled with the working table in a use condition.
FIG. 9 is a schematic view of another embodiment of the first driving spindle of the invention.

### DESCRIPTION OF THE PREFERRED EMBODIMENTS

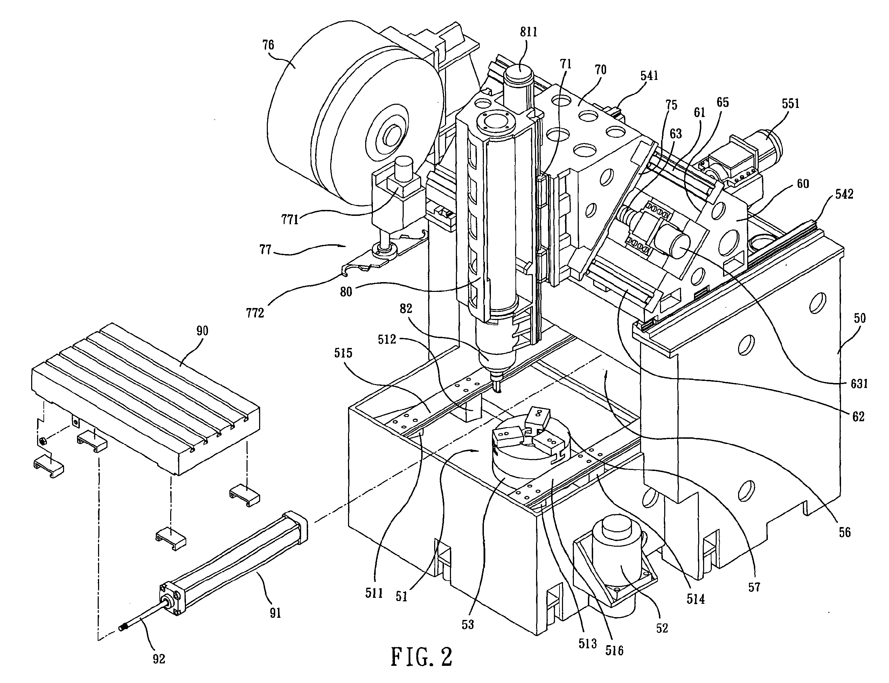

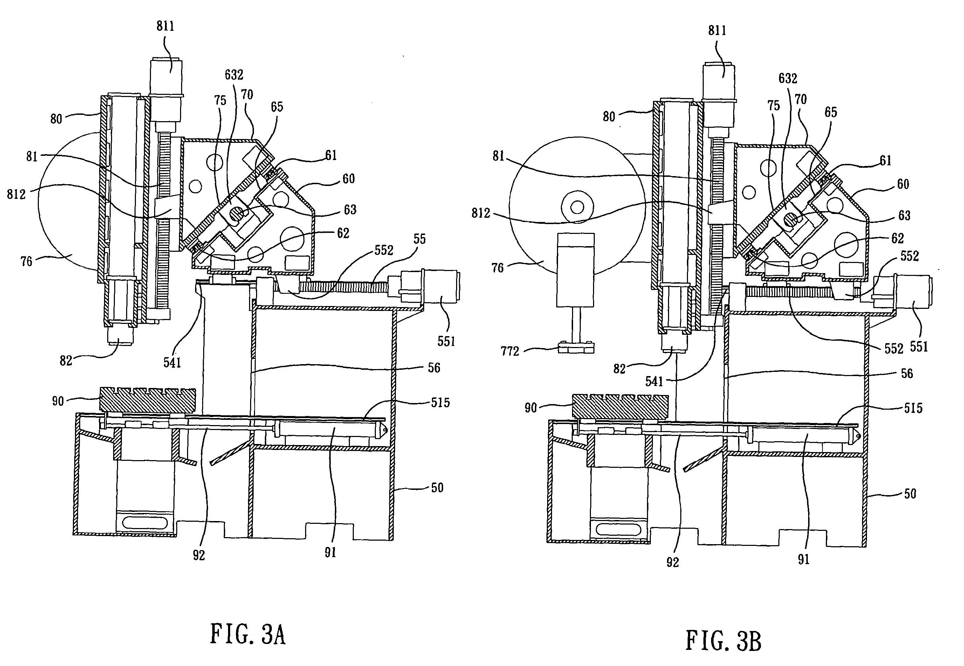

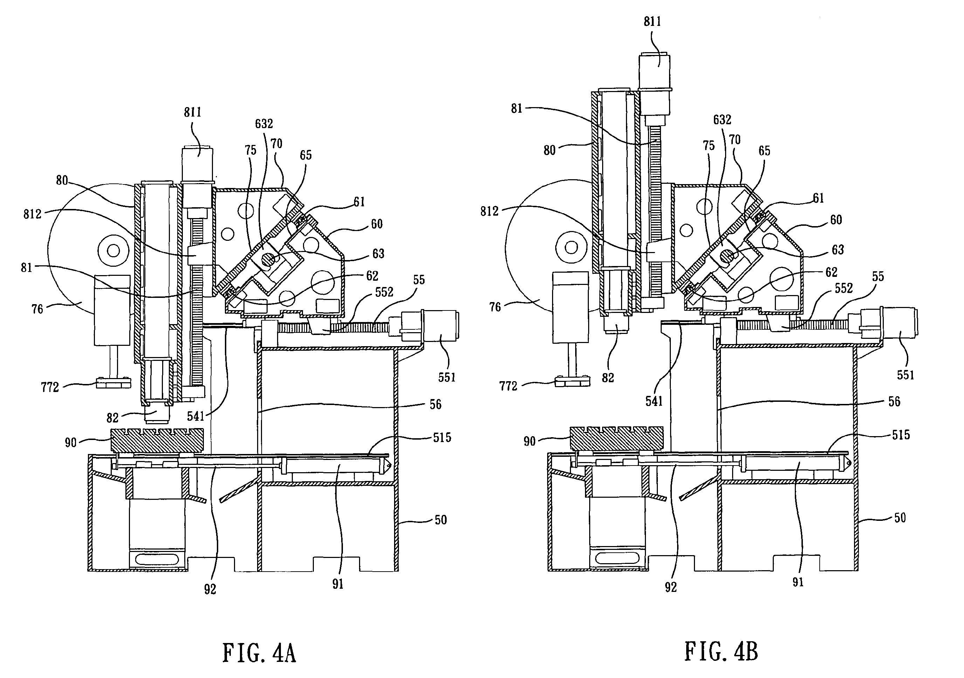

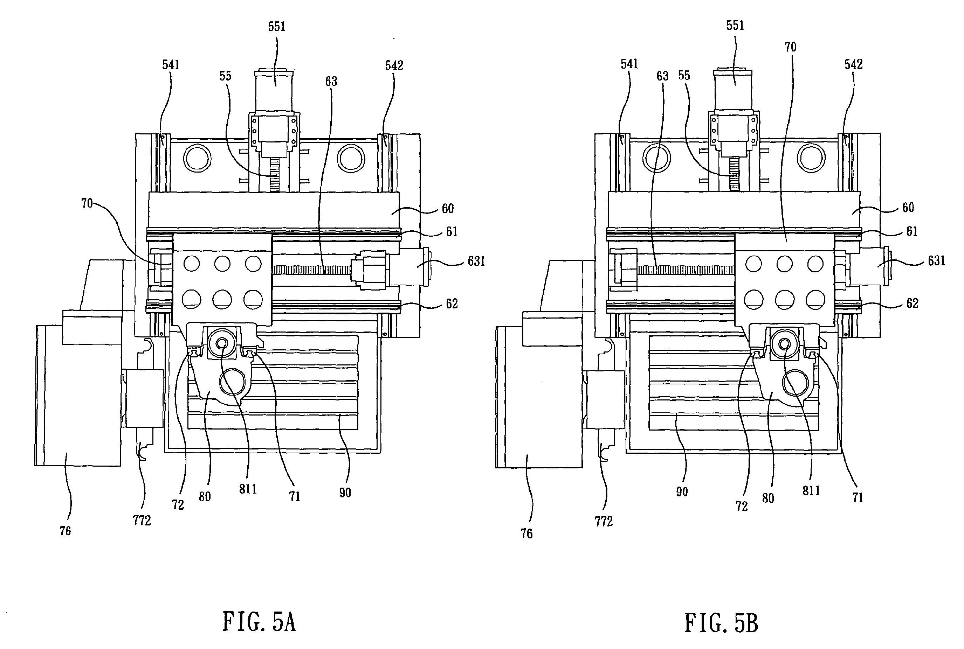

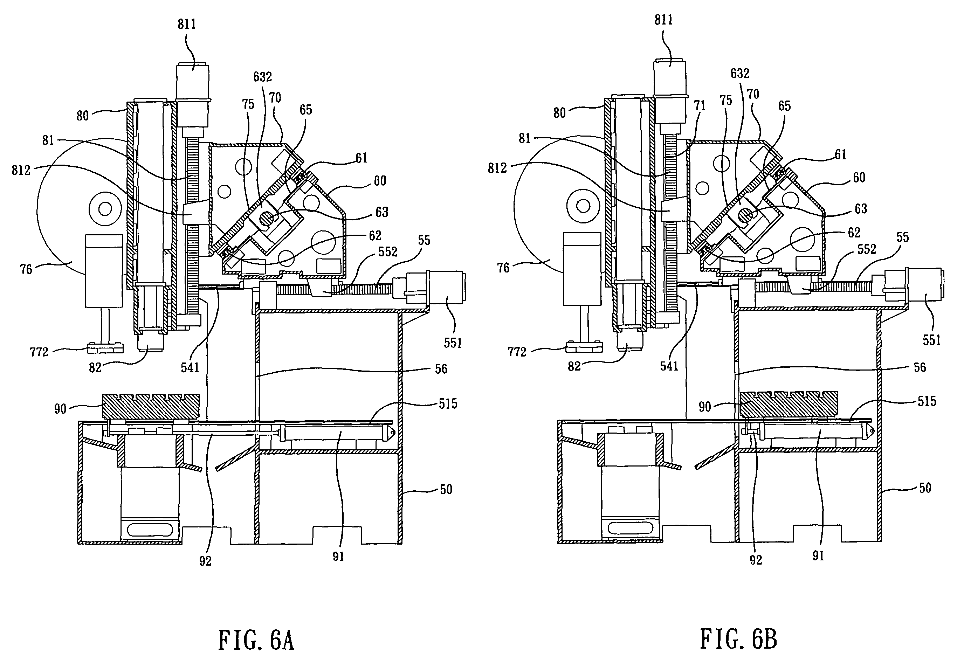

Refer to FIGS. 1 through 6 for an embodiment of the vertical compound lathe and milling machine of the invention. It includes a chassis 50 which has a first shaft 60 located thereon movable forwards and backwards, and a platform 54 on one side at a higher elevation, and another side opposing the platform 54 at a lower elevation, and a holding space 51.

The platform 54 has two first sliding tracks 541 and 542 that are spaced from each other and positioned in a forward and backward direction. There is a first screw bar 55 between the two first sliding tracks 541 and 542. The first screw bar 55 is driven by a first driving motor 551 to rotate in a positive direction or a reverse direction. The first screw bar 55 is coupled and engaged with a first screw sleeve 552 which is movable reciprocally forwards or backwards when the first screw bar 55 rotates in the positive direction or reverse direction. The first shaft 60 is located on the two first sliding tracks 541 and 542 to move forwards and backwards, and has a first sloped surface 65, and a bottom surface to couple with the first screw sleeve 552 to become one body and to be moved reciprocally forwards or backwards as the first screw bar 55 rotates in the positive or reverse direction. The first sloped surface 65 has two transverse and spaced second sliding tracks 61 and 62 that are interposed by a second screw bar 63. The second screw bar 63 is coupled and engaged with a second screw sleeve 632. The second screw bar 63 has one end driven by a second driving motor 631 to rotate in the positive or reverse direction. The second screw sleeve 632 is movable reciprocally leftwards and rightwards. There is a second shaft 70 mounting onto the two first sliding tracks 61 and 62 of the first shaft 60 and movable leftwards and rightwards. The second shaft 70 has a second sloped surface 75. The second sloped surface 75 opposes and in parallel with the first sloped surface 65. One end of the second shaft 70 where the sloped surface is formed is coupled with the second screw sleeve 632 on the first sloped surface to become one body so that they are moved reciprocally leftwards or rightwards when the second screw bar 63 rotates in the positive or reverse direction. The second shaft 70 has a front end with two longitudinal and parallel and spaced third sliding tracks 71 and 72 located thereon. The third sliding tracks 71 and 72 hold a third shaft 80 which is movable up and down. The third shaft 80 is hollow and has the bottom end to couple with a first driving spindle 82, and houses a longitudinal third screw bar 81. The third screw bar 81 is driven by a third driving motor 811 located on the top end of the third shaft 80 to rotate in the positive or reverse direction. The third screw bar 81 is coupled and engaged with a third screw sleeve 812 which is fastened to one side between the third sliding tracks 71 and 72. When the third screw bar 81 rotates in the positive direction or reverse, it drives the third shaft 80 to move up or down. The first driving spindle 82 can hold various cutters. By means of the first shaft 60, second shaft 70 and third shaft 80 that move forwards and backwards, leftwards and rightwards, and up and down, the first driving spindle 82 also is moved forwards and backwards, leftwards and rightwards, and up and down. In addition, there is a cutter magazine 76 on one side of the first shaft 60 that holds a plurality of cutters that may be turned and circulated, such as lathe cutters, milling cutters, drill gimlets, tapping cutters, boring cutters, grinding cutters, engraving cutters and the like (the cutter magazine is known in the art, thus details are omitted). There is a cutter switching mechanism 77 between one side of the cutter magazine 76 and the first driving spindle 82. The cutter switching mechanism 77 includes a fourth driving motor 771 and a switching cutter stem 772 which is driven by the fourth driving motor 771 and turnable for 180 degrees in one cycle. Each rotation is 180 degrees. During rotation, it switches the cutter on the first driving spindle 82 with a cutter held in the cutter magazine 76 so that the first driving spindle 82 can perform machining on the working piece.

The holding space 51 of the chassis 50 aims to collect metal debris produced after machining. The holding space 51 has a plurality of anchor seats 511, 512, 513 and 514 that are extended upwards at the same elevation in a forward and backward manner opposing each other. There are fourth sliding tracks 515 and 516 straddling the top ends of the opposing anchor seats 511, 512, 513 and 514 on the front side and rear side. The fourth sliding tracks 515 and 516 are parallel and extended to a rear side of the chassis 50. The holding space 51 and the platform 54 are joined on a longitudinal interface which has a rectangular opening 56 to allow the fourth sliding tracks 515 and 516 to pass through. There is a working table 90 on the fourth sliding tracks 515 and 516 that is movable forwards and backwards. The working table 90 is fastened to a cylinder rod 92 of an oil cylinder 91. The oil cylinder 91 is located close to the rear side of the chassis 50. The working table 90 may be driven by the oil cylinder 91 to move forwards and backwards. The holding space 51 further has a spindle seat 53 to hold a second driving spindle 57 which is driven by a fifth driving motor 52 to rotate. The working table 90 and the second driving spindle 57 aim to anchor the working piece.

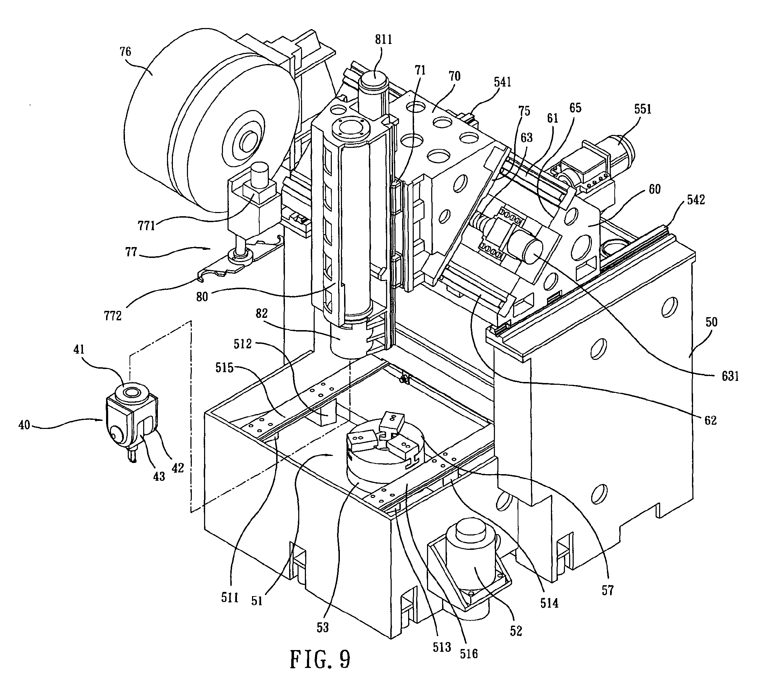

Refer to FIG. 9 for another embodiment of the first driving spindle. The first driving spindle 40 has a coupling member 41 on the top end. The coupling member 41 has a rotary seat 42 on a lower side that may be driven to rotate. The rotary seat 42 has a holding space in the center with an opening leading downwards. The holding space holds a chuck 43 which is turnable when receiving a driving force. The rotation direction of the chuck 43 is vertical to the rotation direction of the rotary seat 42. The chuck 43 can hold various cutters. By means of the aforesaid structure, the cutters on the chuck 43 can perform machining on the working piece at different angles.

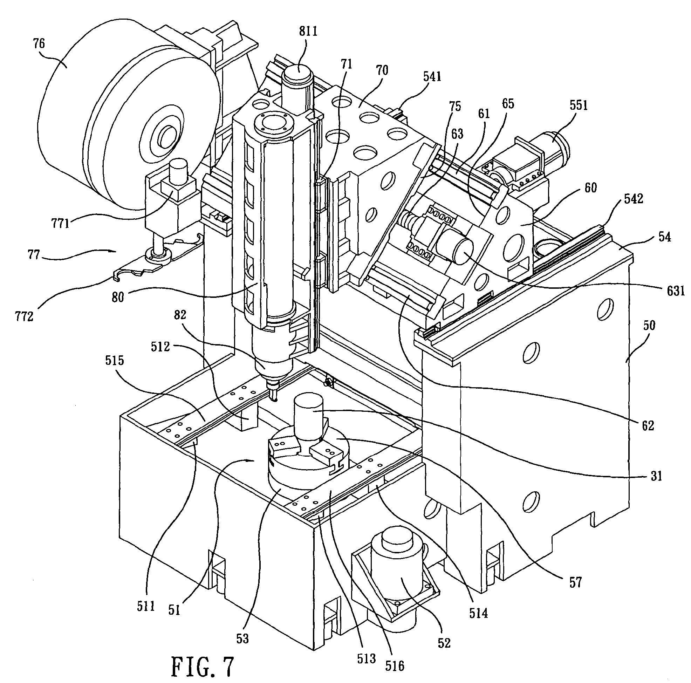

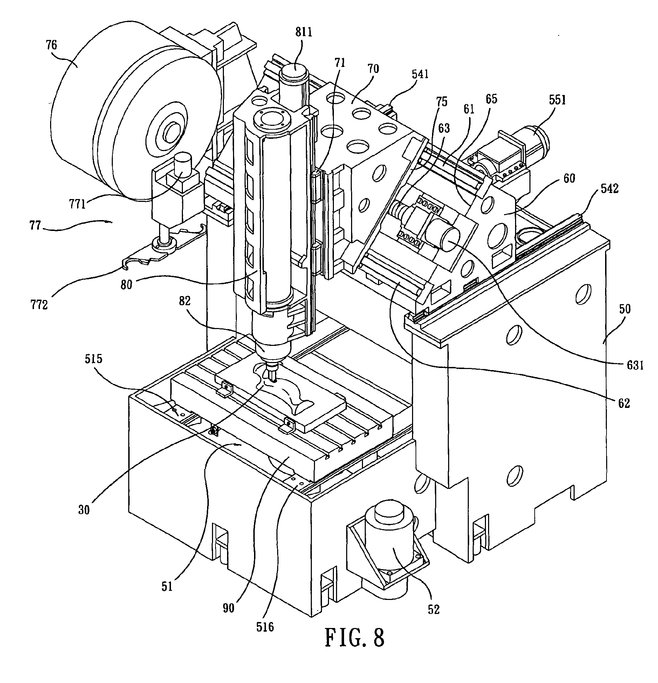

Referring to FIG. 7, when the vertical compound lathe and milling machine is in use for machining, the working table 90 holds and anchors a working piece 30 on the table top. The working piece 30 may be irregular in shape or have a large size. The first driving spindle 82 is moved forwards and backwards through the first shaft 60, leftwards and rightwards through the second shaft 70, and up and down through the third shaft 80. The cutter 25 held on the first driving spindle 82 can automatically perform machining operation on the working piece 30 on the working table 90 through the control of a computer process. And the cutter 25 on the first driving spindle 82 may be switched with the cutters in the cutter magazine 76 through computer process control, so that the cutter 25 on the first driving spindle 82 can perform engraving, drilling, tapping, boring, grinding operation or the like on the working piece 30. Referring to FIG. 8, during cutting and boring operation, the working piece is clamped by the second driving spindle 57.The working table 9 is moved in a space beneath the platform 54 by the oil cylinder 91. Due to the characteristics of the second driving spindle 57, it can hold only the working piece of a round shape or a smaller size. The cutter on the first driving spindle 82 may be switched with lathe or boring cutters in cutter magazine 76 through computer process control to do machining operations on the working piece 31 held by the second driving spindle 57. Moreover, the operation angle of the first driving spindle 82 may be altered as shown in FIG. 9 to do machining on the working piece at varying angles without removing or remounting the working piece. Hence machining efficiency increases. In summary, the invention can provide the following advantages:
1. Improved machining efficiency: The working piece does not have to be removed and mounted onto other machines to do machining operations, hence removing and mounting operations are eliminated. It also saves removing, mounting and transportation time.
2. Greater precision: As the working piece does not need removing and mounting on other machines to do machining operations, the probability of error decreases, and the precision of machining operation increases.
3. More stable machining gravity center: As the contact surface between the first shaft and the second shaft is a sloped surface, the gravity force received by the first shaft is divided to a horizontal and a vertical component of forces. Hence during machining operations or moving of the shafts, the gravity center can be prevented from tilting one side.
4. Higher added value: The invention provides the functions of cutting, milling, engraving, drilling, tapping, boring, grinding and the like that include all machining operations required. Hence users need to procure only one set of the machine of the invention to perform all of aforesaid functions. There is no need to procure one lathe and one milling machine. The procurement cost is lower. It also saves the space of two machines that otherwise required.

While the preferred embodiments of the invention have been set forth for the purpose of disclosure, modifications of the disclosed embodiments of the invention as well as other embodiment thereof may occur to those skilled in the art. Accordingly, the appended claims are intended to cover all embodiments which do not depart from the spirit and scope of the invention.

## Claims

1. A vertical compound lathe and milling machine, comprising:
a chassis having an indented holding space to collect metal debris after machining operations and a platform on one side;
a first shaft on the platform movable forwards and backwards;
a second shaft on the first shaft movable leftwards and rightwards;
a third shaft on the second shaft movable up and down;
a first driving spindle located on the third shaft;
a second driving spindle located in the holding space; and
a working table located in the holding space.

2. The vertical compound lathe and milling machine of claim 1, wherein:
the platform has two first sliding tracks, a first screw bar located between the two first sliding tracks and driven by a first driving motor, the first shaft being located on the two first sliding tracks and driven by the first screw bar to move forwards and backwards;
the first shaft and the second shaft face each other on a first sloped surface, the first sloped surface on the first shaft having two second sliding tracks and a second screw bar between the two second sliding tracks driven by a second driving motor, the second shaft being located on the two second sliding tracks and driven by the second screw bar to move leftwards and rightwards;
the second shaft has two longitudinal third sliding tracks and an anchor seat and a third screw bar between the two third sliding tracks, the third shaft being located on the two third sliding tracks, the third screw bar being coupled and engaged with a screw sleeve, the screw sleeve being fastened to the anchor seat, the third screw bar being driven by a third driving motor located on the third shaft to rotate and move upwards and downwards, and drive the third shaft to move upwards and downwards.

3. The vertical compound lathe and milling machine of claim 1, wherein the first shaft and the second shaft face each other on a sloped surface.

4. The vertical compound lathe and milling machine of claim 1 or 2, wherein the first driving spindle is located above the second driving spindle, the working table being located between the first driving spindle and the second driving spindle.

5. The vertical compound lathe and milling machine of claim 1 or 2, wherein the working table is movable by a driving source.

6. The vertical compound lathe and milling machine of claim 1 or 2 further having a cutter magazine on one side of the first shaft, and a cutter switching mechanism between the cutter magazine and the first driving spindle;
the cutter magazine providing cutters required by the first driving spindle;
the cutter switching mechanism switching the cutters between the cutter magazine and the first driving spindle.

7. The vertical compound lathe and milling machine of claim 1 or 2, wherein the first driving spindle has a rotary seat driven to rotate by a driving force, the rotary seat having a chuck for holding a cutter that is turnable to a selected angle when receiving the driving force.
